(19) 

**Europäisches Patentamt**
**European Patent Office**
**Office européen des brevets**

(11) **EP 3 677 851 B1**

(12) **EUROPEAN PATENT SPECIFICATION**

(45) Date of publication and mention
of the grant of the patent:
**14.01.2026 Bulletin 2026/03**

(21) Application number: **17923422.4**

(22) Date of filing: **03.11.2017**

(51) International Patent Classification (IPC):
**F24F 11/00** (2018.01)    **F24F 11/65** (2018.01)
**F24F 11/77** (2018.01)    **F24F 110/10** (2018.01)
**F24F 110/20** (2018.01)    **F24F 140/20** (2018.01)

(52) Cooperative Patent Classification (CPC):
**F24F 11/65; F24F 11/77;** F24F 11/86;
F24F 2110/10; F24F 2110/20; F24F 2140/20;
Y02B 30/70

(86) International application number:
**PCT/CN2017/109305**

(87) International publication number:
**WO 2019/041542 (07.03.2019 Gazette 2019/10)**

(54) **METHOD AND DEVICE FOR CONTROLLING AN AIR CONDITIONER**

VERFAHREN UND VORRICHTUNG ZUR STEUERUNG EINER KLIMAANLAGE

MÉTHODE ET DISPOSITIF DE COMMANDE D'UN CLIMATISEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.09.2017  CN 201710786420**
**04.09.2017  CN 201710787704**

(43) Date of publication of application:
**08.07.2020  Bulletin 2020/28**

(73) Proprietors:
• **Haier Group Corporation**
**Qingdao, Shandong 266101 (CN)**
• **Qingdao Haier Air Conditioner General Corp.,
Ltd.
Qingdao, Shandong 266101 (CN)**

(72) Inventors:
• **XU, Wenming**
**Qingdao
Shandong 266101 (CN)**
• **WANG, Fei**
**Qingdao
Shandong 266101 (CN)**
• **FU, Yu**
**Qingdao
Shandong 266101 (CN)**

• **ZHANG, Mingjie**
**Qingdao
Shandong 266101 (CN)**
• **LIU, Juke**
**Qingdao
Shandong 266101 (CN)**
• **LI, Bo**
**Qingdao
Shandong 266101 (CN)**
• **YUAN, Junjun**
**Qingdao
Shandong 266101 (CN)**
• **DING, Shuang**
**Qingdao
Shandong 266101 (CN)**
• **REN, Zhiqiang**
**Qingdao
Shandong 266101 (CN)**
• **MA, Lin**
**Qingdao
Shandong 266101 (CN)**

(74) Representative: **dompatent**
**Partnerschaft von
Patentanwälten und Rechtsanwälten mbB
Deichmannhaus am Dom
Bahnhofsvorplatz 1
50667 Köln (DE)**

(56) References cited:

| | |
|---|---|
| EP-A1- 0 893 657 | EP-A1- 1 443 278 |
| EP-A1- 3 059 515 | EP-A1- 3 086 048 |
| WO-A1-2016/032862 | CN-A- 103 557 576 |
| CN-A- 106 958 927 | CN-A- 106 958 928 |
| CN-A- 106 969 476 | CN-A- 106 979 598 |
| CN-A- 107 023 969 | CN-A- 107 084 497 |
| CN-A- 107 084 498 | CN-A- 107 101 339 |
| US-A1- 2007 107 450 | US-B1- 6 241 155 |

**Description**

**TECHNICAL FIELD**

The present invention relates to the field of air conditioner technologies, and more particularly, to a method and a device for controlling an air conditioner.

**BACKGROUND**

With the improvement of living standards, air conditioners have been commonly used. At present, most air conditioners, especially household air conditioners, use vapor compression for cooling or heating.

During the cooling or heating of the air conditioner, a humidity of an action area of the air conditioner may be changed. For example, when a deviation between a preset temperature and an actual temperature of the action area (such as a room) of the air conditioner is relatively large, the air conditioner cools, and a compressor operates at a high frequency, at this time, a coil temperature of an indoor unit of the air conditioner is relatively low, generally lower than a dew-point temperature of an air, and thus water vapor in the air is continuously condensed, when the actual temperature of the room reaches the preset temperature, a humidity of the air may already be very low, and a human body may feel dry and uncomfortable; and when a difference between the actual temperature of the room and the preset temperature is relatively small, the air conditioner cools, and the compressor operates at a low frequency, at this time, the coil temperature relatively high, generally higher than the dew-point temperature of the air, and thus the water vapor in the air will not be condensed; and when the actual temperature of the room reaches the preset temperature, the humidity of the air may be relatively high, and the human body also feels uncomfortable. Therefore, adjusting the humidity of the air is a problem that needs to be solved urgently in the field of current air conditioner technologies.

EP0893657A1 discloses that an air conditioner or heat pump system (10) is equipped with a thermostat (20) control which includes a temperature sensor (22) and a humidity sensor (24) and an algorithm to control the low voltage signals to the indoor blower section (33) and the compressor (32) to control operation of each in response to the indoor temperature and humidity conditions and the desired temperature and humidity setpoints.

EP3059515A1 discloses an air conditioner. In dehumidification operation, too large an air volume of an indoor unit leads to too small an extent of the evaporation region of an indoor heat exchanger to dehumidify the air. An air conditioner of the present invention is capable of performing: cooling operation in which the entirety of the indoor heat exchanger functions as the evaporation region; and dehumidification operation in which a portion of the indoor heat exchanger close to a liquid inlet functions as the evaporation region. The air conditioner includes an indoor fan opposed to the indoor heat exchanger. In the dehumidification operation, the compressor and the expansion valve are controlled so that the extent of the evaporation region varies depending on a load. The maximum number of revolutions of the indoor fan in the dehumidification operation is smaller than the maximum number of revolutions of the indoor fan in the cooling operation.

EP3086048A1 discloses an air-conditioning device. A mode selection unit selects a continuous operation mode when a dehumidifying operation is started. When an indoor temperature is less than or equal to a set first temperature threshold and indoor humidity is greater than a set humidity threshold in the continuous operation mode, the mode selection unit selects an intermittent operation mode. When the indoor temperature is less than or equal to a set second temperature threshold that is greater than the first temperature threshold and the indoor humidity is less than or equal to the set humidity threshold in the intermittent operation mode, the mode selection unit selects an operation stop mode.

**SUMMARY**

Embodiments of the present disclosure provide a method and a device for controlling an air conditioner. In order to basically understand some aspects of the disclosed embodiments, a brief summary is given below. The summary is not a general comment, nor tends to determine key/critical constituent elements or describe a protection scope of these embodiments, and only aims to present some concepts in a simplified form as an introduction of the following detailed description.

According to a first aspect of the embodiments of the present disclosure, there is provided a method for controlling an air conditioner, including:

obtaining a current temperature and humidity value of an action area of the air conditioner; and
if a temperature deviation between a current temperature value in the current temperature and humidity value and a specified temperature value is less than or equal to a specified value, and a current humidity value in the current temperature and humidity value is not in a target comfortable humidity range corresponding to the specified temperature value, switching a current operating mode of at least one component including a fan of the air conditioner according to a humidity parameter of the air conditioner until the current temperature and humidity value meets a specified requirement, wherein the humidity parameter includes a humidity deviation between the obtained current humidity value and a preset target humidity value, or a coil temperature deviation between the obtained current coil temperature value of the air conditioner and a preset target coil temperature value.

In an embodiment of the present disclosure, if the temperature deviation between the current temperature value in the current temperature and humidity value and the specified temperature value is less than or equal to the specified value, and the current humidity value in the current temperature and humidity value is not in the target comfortable humidity range corresponding to the specified temperature value, switching the current operating mode of at least one component including the fan of the air conditioner according to a specified strategy until the current temperature and humidity value meets the specified requirement.

In an embodiment of the present disclosure, the switching the current operating mode of at least one component including the fan of the air conditioner according to the specified strategy includes:

controlling the fan of the air conditioner to operate at a first rotational speed for a specified first duration and then to operate at a second rotational speed, wherein the first rotational speed is greater than the second rotational speed; and
controlling the fan to operate at the second rotational speed for a specified second duration and then to operate at the first rotational speed.

In an embodiment of the present disclosure, the switching the current operating mode of at least one component including the fan of the air conditioner according to the humidity parameter of the air conditioner until the current temperature and humidity value meets the specified requirement includes:

controlling the fan of the air conditioner to operate at a first rotational speed for a first duration and then to operate at a second rotational speed, wherein the first rotational speed is greater than the second rotational speed; and
controlling the fan to operate at the second rotational speed for a second duration and then to operate at the first rotational speed,
wherein a process of determining the second duration includes:

obtaining a change value of the humidity parameter ($\Delta PC$) according to a current humidity parameter ($FC_d$) and a humidity parameter of a previous cycle ($PC_m$); and
determining the second duration according to a formula (1), wherein,

$$T_2 = (A \times \Delta PC + B * PC_d) \times C \qquad (1)$$

where $T_2$ is the second duration, and $A$, $B$, and C are modified operation parameters;
the first duration $T_1$ is a specified duration, or the first duration $T_1$ is a difference between a specified total duration T and the second duration $T_2$.

In an embodiment of the present disclosure, the switching the current operating mode of at least one component including the fan of the air conditioner includes:

switching a current operating frequency of a compressor of the air conditioner to a first frequency when the fan operates at the first rotational speed; and
switching the current operating frequency of the compressor of the air conditioner to a second frequency when the fan operates at the second rotational speed, wherein the first frequency is less than the second frequency.

In an embodiment of the present disclosure, the method further includes:
if the temperature deviation between the current temperature value in the current temperature and humidity value and the specified temperature value is greater than the specified value, controlling the compressor of the air conditioner to operate at a second frequency until the temperature deviation is less than or equal to the specified value, wherein the second frequency is greater than a specified frequency.

In an embodiment of the present disclosure, the method further includes:
if the temperature deviation between the current temperature value in the current temperature and humidity value and the specified temperature value is less than or equal to the specified value, and the current humidity value in the current temperature and humidity value is in the target comfortable humidity range corresponding to the specified temperature value, keeping a current operating mode of the fan.

According to a second aspect of the embodiments of the present disclosure, there is provided a device for controlling an air conditioner, including:

an obtaining unit configured to obtain a current temperature and humidity value of an action area of the air conditioner; and

a first control unit configured to, if a temperature deviation between a current temperature value in the current temperature and humidity value and a specified temperature value is less than or equal to a specified value, and a current humidity value in the current temperature and humidity value is not in a target comfortable humidity range corresponding to the specified temperature value, switch a current operating mode of at least one component including a fan of the air conditioner according to a humidity parameter of the air conditioner until the current temperature and humidity value meets a specified requirement, wherein the humidity parameter includes a humidity deviation between the obtained current humidity value and a preset target humidity value, or a coil temperature deviation between the obtained current coil temperature value of the air conditioner and a preset target coil temperature value.

In an embodiment of the present disclosure, the first control unit is further configured to, if the temperature deviation between the current temperature value in the current temperature and humidity value and the specified temperature value is less than or equal to the specified value, and the current humidity value in the current temperature and humidity value is not in the target comfortable humidity range corresponding to the specified temperature value, switch the current operating mode of at least one component including the fan of the air conditioner according to a specified strategy until the current temperature and humidity value meets the specified requirement.

In an embodiment of the present disclosure, the first control unit is further configured to control the fan of the air conditioner to operate at a first rotational speed for a specified first duration and then to operate at a second rotational speed, wherein the first rotational speed is greater than the second rotational speed; and control the fan to operate at the second rotational speed for a specified second duration and then to operate at the first rotational speed.

In an embodiment of the present disclosure, the first control unit is further configured to control the fan of the air conditioner to operate at a first rotational speed for a first duration and then to operate at a second rotational speed, wherein the first rotational speed is greater than the second rotational speed; and control the fan to operate at the second rotational speed for a second duration and then to operate at the first rotational speed, wherein a process of determining the second duration includes: obtaining a change value of the humidity parameter ($\Delta PC$) according to a current humidity parameter ($PC_d$) and a humidity parameter of a previous cycle ($PC_m$); and determining the second duration according to a formula (1), wherein the first duration $T_1$ is a specified duration, or the first duration $T_1$ is a difference between a specified total duration $T$ and the second duration $T_2$,

$$T_2 = (A \times \Delta PC + B * PC_d) \times C \qquad (1)$$

where $T_2$ is the second duration, and $A$, $B$, and C are modified operation parameters.

In an embodiment of the present disclosure, the first control unit is further configured to switch a current operating frequency of a compressor of the air conditioner to a first frequency when the fan operates at the first rotational speed; and switch the current operating frequency of the compressor of the air conditioner to a second frequency when the fan operates at the second rotational speed, wherein the first frequency is less than the second frequency.

In an embodiment of the present disclosure, the device further includes:

a second control unit configured to, if the temperature deviation between the current temperature value in the current temperature and humidity value and the specified temperature value is greater than the specified value, control the compressor of the air conditioner to operate at a second frequency until the temperature deviation is less than or equal to the specified value, wherein the second frequency is greater than a specified frequency.

In an embodiment of the present disclosure, the device further includes:

a third control unit configured to, if the temperature deviation between the current temperature value in the current temperature and humidity value and the specified temperature value is less than or equal to the specified value, and the current humidity value in the current temperature and humidity value is in the target comfortable humidity range corresponding to the specified temperature value, keep a current operating mode of the fan.

The technical solution provided by the embodiments of the present disclosure may include following beneficial effects:

in the embodiment of the present disclosure, by controlling the operation of at least one component including the fan, the current temperature and humidity value can meet the specified requirement after the air conditioner is operated, and thus a temperature and humidity double control of the air conditioner is realized; further, the switch of the operating mode of the fan is controlled according to the humidity deviation or the coil temperature deviation, and thus the accuracy of the temperature and humidity double control is improved.

It should be understood that both the foregoing general description and the following detailed description are exemplary and explanatory only and are not intended to limit the present disclosure.

BRIEF DESCRIPTION OF THE DRAWINGS

The accompanying drawings, which are incorporated in and constitute a part of this description, illustrate embodiments consistent with the present disclosure and, together with the description, serve to explain the principles of the present disclosure.

Fig. 1 is a flowchart illustrating a method for controlling an air conditioner according to an exemplary embodiment.
Fig. 2 is a flowchart illustrating a method for controlling an air conditioner according to an exemplary embodiment.
Fig. 3 is a flowchart illustrating a method for controlling an air conditioner according to an exemplary embodiment.
Fig. 4 is a flowchart illustrating a method for controlling an air conditioner according to an exemplary embodiment.
Fig. 5 is a block diagram illustrating a device for controlling an air conditioner according to an exemplary embodiment.
Fig. 6 is a block diagram illustrating a device for controlling an air conditioner according to an exemplary embodiment.

DETAILED DESCRIPTION

The following description and accompanying drawings fully illustrate the specific implementation solutions of the present disclosure so that a person skilled in the art can practice them. The embodiments merely represent possible changes. Unless otherwise specified explicitly, the individual component and function are optional and the operation sequence may be changed. Parts and characteristics of some implementation solutions may be included in or replace parts and characteristics of other implementation solutions. The scope of the implementation solutions of the present invention is defined by the scope of the claims. As used herein, each implementation solution may be independently or generally expressed by "present disclosure", which is merely for convenience. As a matter of fact, if more than one disclosure is disclosed, it does not mean that the scope of the application is automatically limited to any single disclosure or disclosure concept. As used herein, terms such as "first" and "second" are merely for distinguishing one entity or operation from another entity or operation and do not require or imply any actual relationship or sequence among these entities or operations. Moreover, terms such as "comprise" and "include" or any other variants indicate a non-exclusive inclusion, so that a process, method or device including a series of elements not only include these elements, but also include other elements not explicitly listed. Without further restrictions, the element defined by the statement "includes a/an ..." does not exclude the existence of other identical elements in the process, method or device that includes the element. As used herein, each embodiment is described progressively, and contents focally described in each embodiment are different from those in other embodiments. The same or similar parts among each of the embodiments may be referred to each other. Regarding a structure, a product and the like disclosed in the embodiments, since they are corresponding to parts disclosed in the embodiments, their description is relatively simple and relevant contents can be referred to the description in the method part.

An air conditioner is already common electrical appliance in daily life. The air conditioner can adjust a temperature of an indoor unit, that is, rise or drop the temperature, so that the temperature of the indoor unit can match a preset temperature set by a user. However, most air conditioners cannot adjust a humidity of the indoor unit at present. In the embodiment of the present disclosure, by controlling the operation of at least one component including the fan, the current temperature and humidity value can meet the specified requirement after the air conditioner is operated, and thus a temperature and humidity double control of the air conditioner is realized.

As an electrical appliance, the air conditioner serves the user, and thus user comfort is an important indicator for determining the performance of the air conditioner. After the temperature is set by the user, in a humidity range corresponding to the specified temperature, the user will feel more comfortable in the temperature and the corresponding humidity range. Here, a target comfortable humidity range corresponds to a specified somatosensory comfortable level of a human body, for example, at the specified temperature, the humidity range corresponding to the most comfortable feeling of the human body is the target comfortable humidity range. Therefore, the target comfortable humidity range is determined according to the somatosensory comfortable level of the human body corresponding to the specified temperature of the air conditioner.

Here, a corresponding relationship between the temperature and the humidity range can be stored in advance, that is, for each specified temperature, multiple human bodies can be tested to obtain a corresponding humidity that is most comfortable for the human body; in a specified area of the preset temperature, a first humidity of samples collected from the multiple human bodies corresponding to the specified somatosensory comfortable level is obtained; the target comfortable humidity range corresponding to the specified temperature is determined according to the first humidity, and the corresponding relationship is saved. For example, the preset temperature is 25°C, at this time, the first humidity is between 40% and 60% of a relative humidity, most users will feel the most comfortable; therefore, multiple first humidity are included in the relative humidity of 40% to 60%, the humidity of 40% to 60% can be determined as the target comfortable humidity range corresponding to the specified temperature, and the corresponding relationship between the preset temperature of 25°C and the target comfortable humidity of 40% to 60% can be saved.

Therefore, the corresponding relationship between the stored temperature and humidity range can be shown in Table 1:

Table 1

| Temperature | Target comfortable humidity range |
|---|---|
| 30°C | humidity 30%~50% |
| 28°C | humidity 35%~60% |
| 26°C | humidity 40%~55% |
| ... | ... |

Here, the target comfortable humidity range corresponding to the specified temperature of the air conditioner can be determined according to the stored corresponding relationship between the temperature and the humidity range. As shown in Table 1, if the specified temperature is 26°C, the target comfortable humidity range can be determined to be a humidity of 40%~55%.

After the specified temperature of the air conditioner is determined, the corresponding target comfortable humidity range can be determined, and then parts of the air conditioner can be controlled to adjust a temperature and a humidity of an action area of the air conditioner to meet a specified requirement.

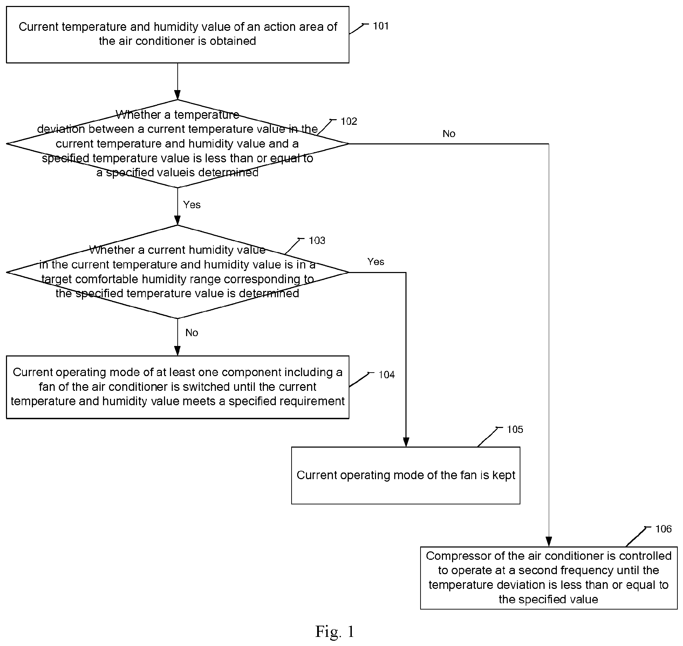

Fig. 1 is a flowchart illustrating a method for controlling an air conditioner according to an exemplary embodiment. As shown in Fig. 1, the method for controlling the air conditioner includes following steps.

Step 101, a current temperature and humidity value of an action area of the air conditioner is obtained.

In the embodiment of the present disclosure, the air conditioner can adjust temperature and humidity of the action area of the air conditioner, and thus the current temperature and humidity value includes: a current temperature value and a current humidity value. In general, the current temperature value of the action area of the air conditioner can be obtained through a corresponding temperature sensor in an air-conditioning system, and there can be multiple ways to obtain the current humidity value in the current temperature and humidity value. If there is a humidity sensor in the air conditioner, the current humidity value of the action area of the air conditioner can be obtained through the humidity sensor. However, for some air conditioners, there is no humidity sensor, and thus the current humidity value in the current temperature and humidity value can be determined by obtaining operating parameters of the air conditioner. Therefore, not only the current temperature value in the current temperature and humidity value of the action area of the air conditioner, but also a coil temperature value of an indoor unit of the air conditioner and an operating frequency value of a compressor need to be obtained, and then the determining the current humidity value in the current temperature and humidity value according to the obtained values may include: obtaining the current humidity value in the current temperature and humidity value through a formula (i) according to the coil temperature value of the indoor unit of the air conditioner and the operating frequency value of the compressor; or obtaining an opening value of an expansion valve in the air conditioner, and obtaining the current humidity value in the current temperature and humidity value through a formula (ii) according to the coil temperature value of the indoor unit, the operating frequency value of the compressor and the opening value.

$$Rh=A1*T1+B1*T2+C1*hz+E \qquad (i)$$

$$Rh=A2*T1+B2*T2+C2*hz+D*f+F \qquad (ii)$$

where Rh is the current humidity value, T1 is the current temperature value, T2 is the coil temperature value of the indoor unit, hz is the operating frequency value of the compressor, f is the opening value, and A1, B1, C1, A2, B2, C2, D, E and F are constants respectively determined according to a type of the air conditioner.

For example, for a type of air conditioner, after many times of debugging statistics, preferably, A1 is a constant greater than or equal to 8 and less than or equal to 12, B1 is a constant greater than or equal to -12 and less than or equal to -8, C1 is a constant greater than or equal to -2 and less than or equal to -1, and E is a constant greater than or equal to -10 and less than or equal to 20, and thus the current humidity value in the current temperature and humidity value can be obtained by the formula (1).

If T1=25, T2=14, and hz=50, and correspondingly, A1=10, B1=-10, and C1=-1, and a corrected value E=10, therefore, the current humidity value Rh=70% can be obtained by the formula (1).

Optionally, for other types of air conditioners, preferred value ranges of A1, B1, C1, and E, or preferred value ranges of A2, B2, C2, D, and F can also be determined through many times of debugging statistics. Specific examples will not be given.

In this way, the current humidity value can be obtained only according to the coil temperature value of the indoor unit of the air conditioner and the operating frequency value of the compressor without adding the humidity sensor, thereby reducing hardware requirements, saving space in the air conditioner, and further saving resources.

Step 102, whether a temperature deviation between a current temperature value in the current temperature and humidity value and a specified temperature value is less than or equal to a specified value is determined; if the temperature deviation between the current temperature value in the current temperature and humidity value and the specified temperature value is less than or equal to a specified value, step 103 is performed; otherwise, step 106 is performed.

The current temperature and humidity value include: the current temperature value and the current humidity value. The current temperature value is Td, when the air conditioner operates, a temperature has been set in advance, that is, a specified temperature value Ts, and a target comfortable humidity range (RH1, RH2) corresponding to the specified temperature value Ts can be determined. For example, according to Table 1, the specified temperature value is 28°C, the corresponding target comfortable humidity range (RH1, RH2) is (35%, 60%).

The temperature deviation between the current temperature value in the current temperature and humidity value and the specified temperature value can be obtained first, that is, the temperature deviation pn=Td-Ts. In the embodiment of the present disclosure, if the current temperature value is close to the specified temperature value, for example, when pn ≦ 3, a humidity control may be performed on the air conditioner; and if the current temperature value is larger than the specified temperature value, for example, when pn>3, a temperature control may be sequentially performed on the air conditioner. Therefore, a specified value can be preset, and the specified value can be determined according to a model of the air conditioner and multiple test data. For example, the specified value is 2, 3, 3.5, and so on.

In this way, the temperature deviation pn is compared with the specified value, if the temperature deviation is less than or equal to the specified value, step 103 can be performed; otherwise, step 106 can be performed.

Step 103, whether a current humidity value in the current temperature and humidity value is in a target comfortable humidity range corresponding to the specified temperature value is determined; if the current humidity value in the current temperature and humidity value is not in the target comfortable humidity range corresponding to the specified temperature value, step 104 is performed; and if the current humidity value in the current temperature and humidity value is in the target comfortable humidity range corresponding to the specified temperature value, step 105 is performed.

If the temperature deviation is less than or equal to the specified value, that is, the current temperature value is close to the specified temperature value, and the humidity control can be performed on the air conditioner. Therefore, it is necessary to further determine whether the current humidity value is in the target comfortable humidity range corresponding to the specified temperature value. If the current humidity value RHd is in the target comfortable humidity range (RH1, RH2), step 105 can be performed; and if the current humidity value RHd is not in the target comfortable humidity range (RH1, RH2), step 104 can be performed.

Step 104, a current operating mode of at least one component including a fan of the air conditioner is switched until the current temperature and humidity value meets a specified requirement.

Since the current humidity value RHd is not in the target comfortable humidity range (RH1, RH2), by controlling the operation of at least one component including the fan, the current temperature and humidity value can meet the specified requirement after the air conditioner is operated.

The air conditioner is composed of a plurality of components, including a compressor, an evaporator, a throttle valve, and the like. In the embodiment of the present disclosure, the air conditioner further includes a fan. The switching the current operating mode of at least one component including the fan of the air conditioner until the current temperature and humidity value meets the specified requirement specifically includes: controlling the fan of the air conditioner to operate at a first rotational speed for a specified first duration and then to operate at a second rotational speed, wherein the first rotational speed is greater than the second rotational speed; and controlling the fan to operate at the second rotational speed for a specified second duration and then to operate at the first rotational speed.

In the embodiment of the present disclosure, in a high temperature and high humidity environment, the air conditioner can be generally used to adjust the temperature and humidity of the environment. Since the current humidity value RHd is not in the target comfortable humidity range (RH1, RH2), and generally RHd>RH2, the operating mode of the fan of the air conditioner can be switched to reduce the humidity value of the action area of the air conditioner. When the rotational speed of the fan is relatively high, for example, the fan operates at the first rotational speed, the refrigerating capacity of the sensible heat of the air conditioner can be changed quickly, so the temperature can be reduced; and when the rotational speed of the fan is relatively low, for example, the fan operates at the second rotational speed, at this time, the temperature does not change much, but dehumidification can be performed. In this way, the fan operates at the first rotational speed for the first duration, and then is switched to operate at the second rotational speed for the second duration; further, the fan is switched to operate at the first rotational speed for the first duration, and then is continuously switched to operate at the second rotational speed for the second duration. By sequentially switching the fan, the humidity of the action area can be changed while the temperature is being stabilized; and finally, the current temperature and humidity value can meet the specified requirement by switching the operating mode of the fan.

Of course, the air conditioner mainly depends on the operation of the compressor to adjust the temperature and humidity in the action area. Therefore, preferably, a current operating frequency of the compressor of the air conditioner is switched to a first frequency when the fan operates at the first rotational speed; and the current operating frequency of the compressor of the air conditioner is switched to a second frequency when the fan operates at the second rotational speed, wherein the first frequency is less than the second frequency.

In general, the first rotational speed is greater than the second rotational speed, the first rotational speed can be set to be a high speed, which is greater than a specified speed; and the second rotational speed can be set to be a low speed, which is less than the specified speed. The first frequency is less than the second frequency, similarly, the first frequency can be set to be a low frequency, which is lower than a specified frequency; and the second frequency can be set to be a high frequency, which is greater than the specified frequency. In this way, when the compressor operates at the first frequency and the fan operates at the first rotational speed, the compressor is at the low frequency and the fan is at the high rotational speed at this time, and the temperature can be reduced by adjusting the refrigerating capacity of the sensible heat of the air conditioner. When the compressor operates at the second frequency and the fan operates at the second rotational speed, the compressor is at the high frequency and the fan is at the low rotational speed at this time, and dehumidification can be performed by adjusting the refrigerating capacity of the latent heat of the air conditioner. Therefore, the temperature and humidity double control of the air conditioner can be realized by switching the operating modes of the fan and the compressor.

Since it is necessary to switch the operating modes of the fan and the compressor to realize the temperature and humidity double control of the air conditioner, the timing of switching is particularly important. In the embodiment of the present disclosure, the timing may be determined in various ways, including: switching the current operating mode of at least one component including the fan of the air conditioner according to a specified strategy until the current temperature and humidity value meets the specified requirement.

According to a performance signal of the air conditioner and test data for many times, a specified first duration and a specified second duration can be determined, so that the fan of the air conditioner is controlled to operate at the first rotational speed for the specified first duration and then to operate at the second rotational speed; and the fan is controlled to operate at the second rotational speed for the specified second duration and then to operate at the first rotational speed. Optionally, a cycle T and a high fan operating time ratio X% can be determined, therefore, the fan of the air conditioner is controlled to operate at the first rotational speed for T*X% and then to operate at the second rotational speed; and the fan is controlled to operate at the second rotational speed for T*(1-X%) and then to operate at the first rotational speed, wherein the first rotational speed is greater than the second rotational speed.

Optionally, in another embodiment of the present disclosure, the current operating mode of at least one component including the fan of the air conditioner is switched according to the humidity parameter of the air conditioner until the current temperature and humidity value meets the specified requirement, wherein the humidity parameter includes a humidity deviation between the obtained current humidity value and a preset target humidity value, or a coil temperature deviation between the obtained current coil temperature value of the air conditioner and a preset target coil temperature value. Specifically, the fan of the air conditioner is controlled to operate at a first rotational speed for a first duration and then to operate at a second rotational speed, wherein the first rotational speed is greater than the second rotational speed; and the fan is controlled to operate at the second rotational speed for a second duration and then to operate at the first rotational speed, wherein a process of determining the second duration includes: obtaining a change value of the humidity parameter ($\Delta PC$) according to a current humidity parameter ($PC_d$) and a humidity parameter of a previous cycle ($PC_m$); and determining the second duration according to a formula (1); the first duration $T_1$ is a specified duration, or the first duration $T_1$ is a difference between a specified total duration T and the second duration $T_2$,

$$T_2 = (A \times \Delta PC + B * PC_d) \times C \qquad (1)$$

where $T_2$ is the second duration, and *A, B,* and C are modified operation parameters.

In the embodiment of the present disclosure, the humidity parameter includes the humidity deviation between the obtained current humidity value and the preset target humidity value, or the coil temperature deviation between the obtained current coil temperature value of the air conditioner and the preset target coil temperature value. Of course, the different the humidity parameter, the different the corresponding A, B, and C.

**EP 3 677 851 B1**

When the humidity parameter is the humidity deviation, the target comfortable humidity range corresponding to the specified temperature value has been determined, and thus the determining the preset target humidity value according to the target comfortable humidity range includes: determining an average value of the target comfortable humidity range as the preset target humidity value, or randomly selecting a target humidity value from the target comfortable humidity range as the preset target humidity value. For example, if the specified temperature is 28°C, and the corresponding target comfortable humidity range (RH1, RH2) is (35%, 60%), the preset target humidity value can be determined to be 48%, or 47.5%. Then, the current humidity deviation $PC_d$ is a difference between the current humidity value and the preset target humidity value.

In the previous control cycle, the corresponding humidity deviation is the humidity parameter of the previous cycle $PC_m$, and thus the change value of the humidity deviation $\Delta PC = PC_d\text{-}PC_m$. Therefore, the second duration can be determined according to the formula (1).

For example, if $PC_d$=20, $\Delta PC$=5, and A=3, B=5, and C=1, it can be determined that $T_2$=115 seconds. At this time, the first duration $T_1$ can be set to 50 seconds, and thus the fan of the air conditioner is controlled to operate at the first rotational speed for 50 seconds and then to operate at the second rotational speed, and the fan is controlled to operate at the second rotational speed for 115 seconds and then to operate at the first rotational speed. Alternatively, when the cycle for controlling the air conditioner is 180 seconds, $PC_d$=10, $\Delta PC$=2, and A=5%, B=6%, and C=180, it can be determined that $T_2$=0.7*180=126 seconds, and $T_1$=$T$-$T_2$=54 seconds, and thus the fan of the air conditioner is controlled to operate at the first rotational speed for 54 seconds and then to operate at the second rotational speed, and the fan is controlled to operate at the second rotational speed for 126 seconds and then to operate at the first rotational speed.

If the humidity parameter is the coil temperature deviation, the current coil temperature value of the air conditioner and the preset target coil temperature value also need to be obtained. The target coil temperature value can also correspond to the specified temperature value one by one, therefore, after the specified temperature value is set, the target coil temperature value can be determined. In this embodiment, the current coil temperature value of the air conditioner can also be obtained, and thus the coil temperature deviation between the current coil temperature value of the air conditioner and the target coil temperature value can be determined as the current humidity parameter $PC_d$.

Similarly, in the previous control cycle, the corresponding coil temperature deviation, that is, the humidity parameter of the previous control cycle, can be obtained, and thus the change value of the coil temperature deviation $\Delta PC = PC_d - PC_m$. Therefore, the second duration can be determined according to the formula (1).

For example, when the cycle for controlling the air conditioner is 300 seconds, $PC_d$=10, $\Delta PC$=2, and A=4%, B=6%, and C=300, it can be determined that $T_2$=0.68*300=204 seconds, and $T_1$=$T$-$T_2$=96 seconds, and thus the fan of the air conditioner is controlled to operate at the first rotational speed for 96 seconds and then to operate at the second rotational speed, and the fan is controlled to operate at the second rotational speed for 204 seconds and then to operate at the first rotational speed. Or, $PC_d$=10, $\Delta PC$=2, and A=4, B=6, and C=1, it can be determined that $T_2$=68 seconds, and the first duration $T_1$=$T$-$T_2$=30 seconds, and thus the fan of the air conditioner is controlled to operate at the first rotational speed for 30 seconds and then to operate at the second rotational speed, and the fan is controlled to operate at the second rotational speed for 68 seconds and then to operate at the first rotational speed.

Step 105, a current operating mode of the fan is kept.

The temperature deviation is less than or equal to the specified value, and the current humidity value in the current temperature and humidity value is in the target comfortable humidity range corresponding to the specified temperature value, at this time, the rotational speed of the fan does not need to be switched, and the temperature will slowly drop until the temperature meets the specified requirement.

Step 106, the compressor of the air conditioner is controlled to operate at a second frequency until the temperature deviation is less than or equal to the specified value.

The second frequency is greater than a specified frequency, that is, the compressor operates at a high frequency, and thus the temperature can be quickly dropped until the temperature deviation is less than or equal to the specified value.

It can be seen that, in the embodiment of the present disclosure, by controlling the operation of at least one component including the fan, the current temperature and humidity value can meet the specified requirement after the air conditioner is operated, and thus a temperature and humidity double control of the air conditioner is realized; and the switching of the operating mode of the fan can be controlled according to a specified duration strategy, and thus the efficiency of the temperature and humidity double control is improved. In addition, the switching of the operating mode of the fan can also be controlled according to the humidity deviation or the coil temperature deviation, and thus the accuracy of the temperature and humidity double control is further improved.

The following describes the operation flow in specific embodiments to illustrate the methods provided by the embodiments of the present disclosure.

First embodiment, in the embodiment of the present disclosure, a current operating mode of at least one component including a fan of an air conditioner is switched according to a specified strategy.

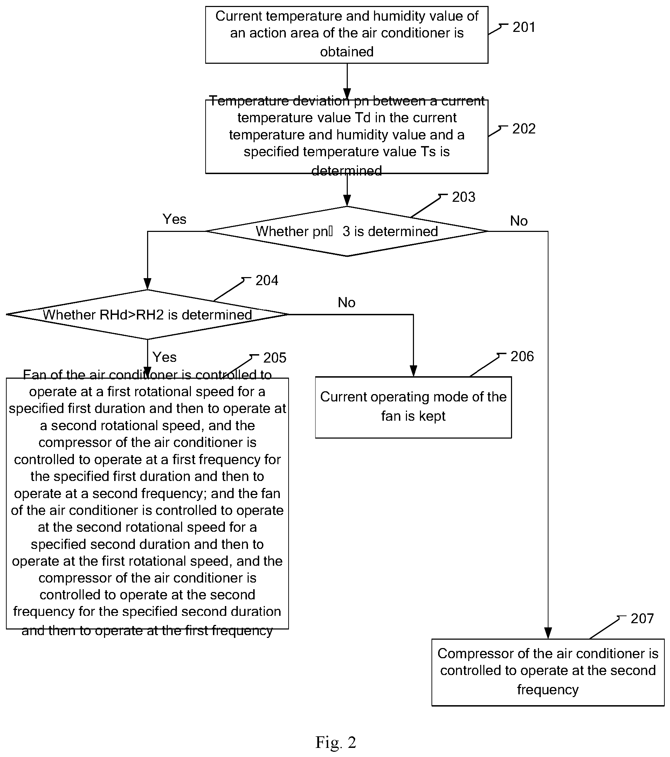

Fig. 2 is a flowchart illustrating a method for controlling an air conditioner according to an exemplary embodiment. As shown in Fig. 2, the method for controlling the air conditioner includes following steps.

Step 201, a current temperature and humidity value of an action area of the air conditioner is obtained.

The current temperature value is obtained through a temperature sensor, further, a coil temperature value of an indoor unit and an operating frequency value of a compressor can also be obtained, and thus the current humidity value in the current temperature and humidity value can be obtained according to the following formula:

$$RHd=A1*T1+B1*T2+C1*hz+E,$$

where RHd is the current humidity value, T1 is the current temperature value, T2 is the coil temperature value of the indoor unit, hz is the operating frequency value of the compressor, and A1, B1, C1, and E are constants respectively determined according to a type of the air conditioner.

Step 202, a temperature deviation pn between a current temperature value Td in the current temperature and humidity value and a specified temperature value Ts is determined.

Here, pn=Td-Ts.

Step 203, whether pn ≦ 3 is determined; if pn ≦ 3, step 204 is performed; otherwise, step 207 is performed.

If a specified value is 3, and pn ≦ 3, that is, the temperature deviation is less than or equal to the specified value, step 204 is performed; otherwise, step 207 is performed.

Step 204, whether RHd>RH2 is determined; if RHd>RH2, step 205 is performed; otherwise, step 206 is performed.

In general, the air conditioner is used in high temperature and humidity environments for performing a temperature and humidity double control. Therefore, it is only necessary to determine whether the current humidity value is greater than an upper limit value of the target comfortable humidity range, if the current humidity value is greater than the upper limit value of the target comfortable humidity range, step 205 is performed; otherwise, step 206 is performed.

Step 205, the fan of the air conditioner is controlled to operate at a first rotational speed for a specified first duration and then to operate at a second rotational speed, and the compressor of the air conditioner is controlled to operate at a first frequency for the specified first duration and then to operate at a second frequency; and the fan of the air conditioner is controlled to operate at the second rotational speed for a specified second duration and then to operate at the first rotational speed, and the compressor of the air conditioner is controlled to operate at the second frequency for the specified second duration and then to operate at the first frequency.

Here, according to the specific performance of the air conditioner, the first frequency can be a low-gear frequency corresponding to the compressor, i.e. low frequency, and the second frequency is a high frequency; the first rotational speed is a high-gear rotational speed corresponding to the fan, i.e. high fan, and the second rotational speed is low fan.

Step 206, a current operating mode of the fan is kept.

Here, if RHd<RH2 and pn ≦ 3, the temperature only needs to be slowly dropped to keep the current operating mode of the fan unchanged.

Step 207, the compressor of the air conditioner is controlled to operate at the second frequency.

Obviously, if the current temperature value is too high, the temperature needs to be further dropped. Therefore, the compressor operates at the high frequency to rapidly drop the temperature.

It can be seen that, in the embodiment of the present disclosure, by controlling the operation of at least one component including the fan, the current temperature and humidity value can meet the specified requirement after the air conditioner is operated, and thus a temperature and humidity double control of the air conditioner is realized; and the switching of the operating mode of the fan can be controlled according to a specified duration strategy, and thus the efficiency of the temperature and humidity double control is improved.

Second embodiment, a current operating mode of at least one component including a fan of the air conditioner is switched according to a humidity parameter of the air conditioner until the current temperature and humidity value meets a specified requirement, wherein the humidity parameter is a humidity deviation between the obtained current humidity value and a preset target humidity value.

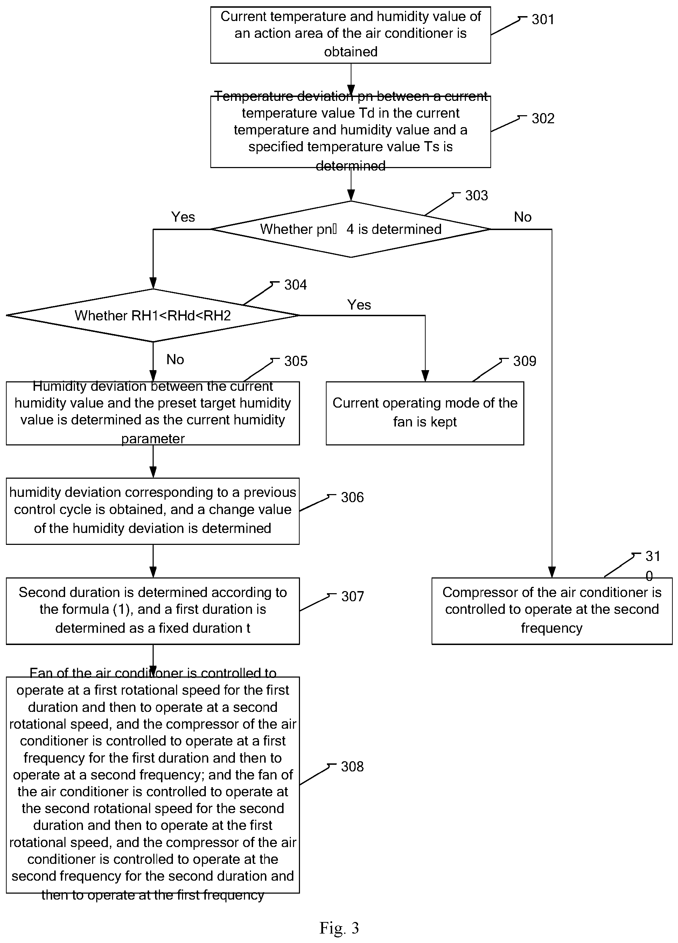

Fig. 3 is a flowchart illustrating a method for controlling an air conditioner according to an exemplary embodiment. As shown in Fig. 3, the method for controlling the air conditioner includes following steps.

Step 301, a current temperature and humidity value of an action area of the air conditioner is obtained.

The current temperature value is obtained through a temperature sensor, and the humidity value is obtained through a humidity sensor.

Step 302, a temperature deviation pn between a current temperature value Td in the current temperature and humidity value and a specified temperature value Ts is determined.

Here, pn=Td-Ts.

Step 303, whether pn ≦ 4 is determined; if pn ≦ 4, step 304 is performed; otherwise, step 310 is performed.

If a specified value is 4, and pn ≦ 4, that is, the temperature deviation is less than or equal to the specified value, step 304 is performed; otherwise, step 310 is performed.

Step 304, whether RH1<RHd<RH2 is determined; if no, step 305 is performed; and if yes, step 309is performed.

Step 305, the humidity deviation between the current humidity value and the preset target humidity value is determined as the current humidity parameter $PC_d$.

Here, the preset target humidity value can be determined according to an average value of the target comfortable humidity range (RH1, RH2), and the humidity deviation between the current humidity value and the preset target humidity value is determined as the current humidity parameter $PC_d$.

Step 306, a humidity deviation $PC_m$ corresponding to a previous control cycle is obtained, and a change value of the humidity deviation $\Delta PC$ is determined.

In the previous control cycle, the corresponding humidity deviation is the humidity parameter of the previous cycle $PC_m$, and thus the change value of the humidity deviation $\Delta PC = PC_d - PC_m$.

Step 307, a second duration $T_2$ is determined according to the formula (1), and a first duration $T_1$ is determined as a fixed duration t.

For example, if $PC_d$=15, $\Delta PC$=5, and A=3, B=6, and C=1, it can be determined that $T_2$=105 seconds. At this time, the first duration $T_1$ can be set to 45 seconds.

Step 308, the fan of the air conditioner is controlled to operate at a first rotational speed for the first duration $T_1$ and then to operate at a second rotational speed, and the compressor of the air conditioner is controlled to operate at a first frequency for the first duration $T_1$ and then to operate at a second frequency; and the fan of the air conditioner is controlled to operate at the second rotational speed for the second duration $T_2$ and then to operate at the first rotational speed, and the compressor of the air conditioner is controlled to operate at the second frequency for the second duration $T_2$ and then to operate at the first frequency.

Here, according to the specific performance of the air conditioner, the first frequency can be a low-gear frequency corresponding to the compressor, i.e. low frequency, and the second frequency is a high frequency; the first rotational speed is a high-gear rotational speed corresponding to the fan, i.e. high fan, and the second rotational speed is low fan.

Step 309, a current operating mode of the fan is kept.

Here, if RH1<RHd<RH2 and pn ≦ 4, the temperature only needs to be slowly dropped to keep the current operating mode of the fan unchanged.

Step 310, the compressor of the air conditioner is controlled to operate at the second frequency.

Obviously, if the current temperature value is too high, the temperature needs to be further dropped. Therefore, the compressor operates at the high frequency to rapidly drop the temperature.

It can be seen that, in the embodiment of the present disclosure, by controlling the operation of at least one component including the fan, the current temperature and humidity value can meet the specified requirement after the air conditioner is operated, and thus a temperature and humidity double control of the air conditioner is realized; and the switching of the operating mode of the fan can be controlled according to the humidity deviation, and thus the accuracy of the temperature and humidity double control is improved.

Third embodiment, a current operating mode of at least one component including a fan of the air conditioner is switched according to a humidity parameter of the air conditioner until the current temperature and humidity value meets a specified requirement, wherein the humidity parameter is a coil temperature deviation between the obtained current coil temperature value of the air conditioner and a preset target coil temperature value.

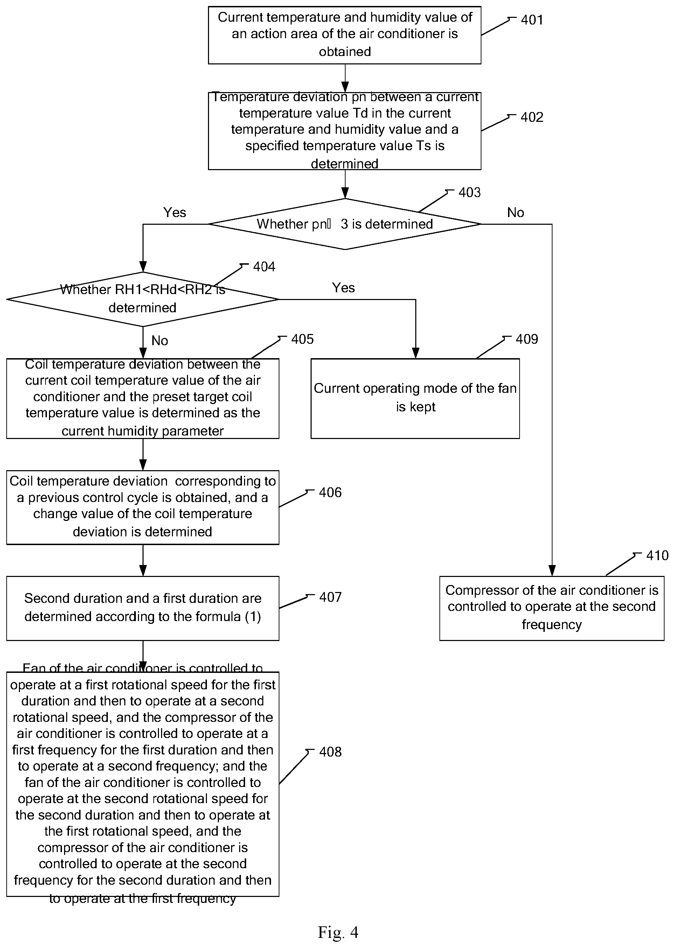

Fig. 4 is a flowchart illustrating a method for controlling an air conditioner according to an exemplary embodiment. As shown in Fig. 4, the method for controlling the air conditioner includes following steps.

Step 401, a current temperature and humidity value of an action area of the air conditioner is obtained.

The current temperature value is obtained through a temperature sensor, and the humidity value is obtained through a humidity sensor or other methods.

Step 402, a temperature deviation pn between a current temperature value Td in the current temperature and humidity value and a specified temperature value Ts is determined.

Here, pn=Td-Ts.

Step 403, whether pn ≦ 3 is determined; if pn ≦ 3, step 404 is performed; otherwise, step 410 is performed.

If a specified value is 3, and pn ≦ 3, that is, the temperature deviation is less than or equal to the specified value, step 404 is performed; otherwise, step 410 is performed.

Step 404, whether RH1<RHd<RH2 is determined; if no, step 405 is performed; and if yes, step 409is performed.

Step 405, the coil temperature deviation between the current coil temperature value of the air conditioner and the preset target coil temperature value is determined as the current humidity parameter $PC_d$.

Here, the target coil temperature value is determined according to the specified temperature value, and the current coil temperature value of the air conditioner can be obtained, and thus the coil temperature deviation between the current coil temperature value of the air conditioner and the preset target coil temperature value is determined as the current humidity parameter $PC_d$.

Step 406, a coil temperature deviation $PC_m$ corresponding to a previous control cycle is obtained, and a change value of the coil temperature deviation $\Delta PC$ is determined.

In the previous control cycle, the corresponding coil temperature deviation is the humidity parameter of the previous cycle $PC_m$, and thus the change value of the coil temperature deviation $\Delta PC=PC_d-PC_m$.

Step 407, a second duration $T_2$ and a first duration $T_1$ are determined according to the formula (1).

For example, if $PC_d=10$, $\Delta PC=2$, and A=4%, B=6%, and C=300, it can be determined that $T_2 =0.68*300=204$ seconds. At this time, $T_1=T-T_2=96$ seconds.

Step 408, the fan of the air conditioner is controlled to operate at a first rotational speed for the first duration $T_1$ and then to operate at a second rotational speed, and the compressor of the air conditioner is controlled to operate at a first frequency for the first duration $T_1$ and then to operate at a second frequency; and the fan of the air conditioner is controlled to operate at the second rotational speed for the second duration $T_2$ and then to operate at the first rotational speed, and the compressor of the air conditioner is controlled to operate at the second frequency for the second duration $T_2$ and then to operate at the first frequency.

Here, according to the specific performance of the air conditioner, the first frequency can be a low-gear frequency corresponding to the compressor, i.e. low frequency, and the second frequency is a high frequency; the first rotational speed is a high-gear rotational speed corresponding to the fan, i.e. high fan, and the second rotational speed is low fan.

Step 409, a current operating mode of the fan is kept.

Here, if RH1<RHd<RH2 and pn $\leqq$ 3, the temperature only needs to be slowly dropped to keep the current operating mode of the fan unchanged.

Step 410, the compressor of the air conditioner is controlled to operate at the second frequency.

Obviously, if the current temperature value is too high, the temperature needs to be further dropped. Therefore, the compressor operates at the high frequency to rapidly drop the temperature.

It can be seen that, in the embodiment of the present disclosure, by controlling the operation of at least one component including the fan, the current temperature and humidity value can meet the specified requirement after the air conditioner is operated, and thus a temperature and humidity double control of the air conditioner is realized; and the switching of the operating mode of the fan can be controlled according to the coil temperature deviation, and thus the accuracy of the temperature and humidity double control is improved.

The following are device embodiments of the present disclosure, and the device embodiments may be configured to execute the method embodiments of the present disclosure.

According to the above-mentioned method for controlling the air conditioner, a device for controlling an air conditioner can be constructed.

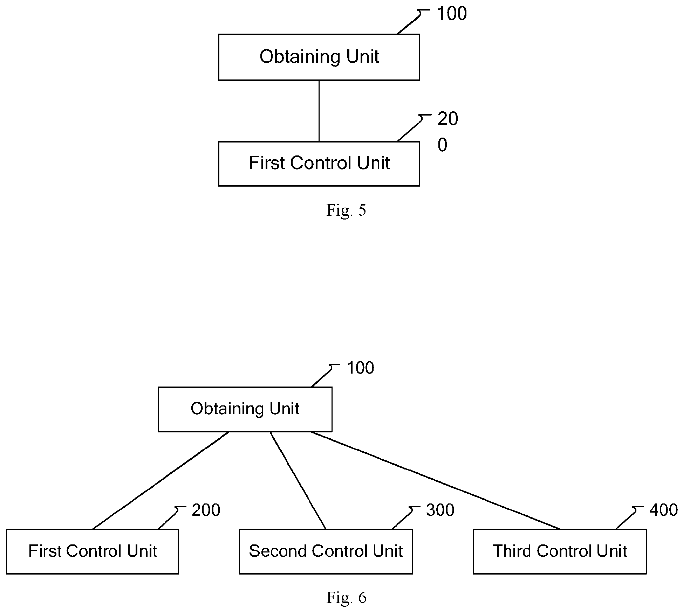

Fig. 5 is a block diagram illustrating a device for controlling an air conditioner according to an exemplary embodiment. As shown in Fig. 5, the device includes: an obtaining unit 100 and a first control unit 200.

The obtaining unit 100 is configured to obtain a current temperature and humidity value of an action area of the air conditioner.

The first control unit 200 is further configured to, if the temperature deviation between the current temperature value in the current temperature and humidity value and the specified temperature value is less than or equal to the specified value, and the current humidity value in the current temperature and humidity value is not in the target comfortable humidity range corresponding to the specified temperature value, switch the current operating mode of at least one component including the fan of the air conditioner according to a specified strategy until the current temperature and humidity value meets the specified requirement.

In an embodiment of the present disclosure, the first control unit 200 is further configured to control the fan of the air conditioner to operate at a first rotational speed for a specified first duration and then to operate at a second rotational speed, wherein the first rotational speed is greater than the second rotational speed; and control the fan to operate at the second rotational speed for a specified second duration and then to operate at the first rotational speed.

In an embodiment of the present disclosure, the first control unit 200 is further configured to switch the current operating mode of at least one component including the fan of the air conditioner according to the humidity parameter of the air conditioner until the current temperature and humidity value meets the specified requirement, wherein the humidity parameter includes a humidity deviation between the obtained current humidity value and a preset target humidity value, or a coil temperature deviation between the obtained current coil temperature value of the air conditioner and a preset target coil temperature value.

In an embodiment of the present disclosure, the first control unit 200 is further configured to control the fan of the air conditioner to operate at a first rotational speed for a first duration and then to operate at a second rotational speed, wherein the first rotational speed is greater than the second rotational speed; and control the fan to operate at the second rotational speed for a second duration and then to operate at the first rotational speed, wherein a process of determining the second duration includes: obtaining a change value of the humidity parameter ($VPC$) according to a current humidity parameter ($PC_d$) and a humidity parameter of a previous cycle ($PC_m$); and determining the second duration according to a formula (1), wherein the first duration $T_1$ is a specified duration, or the first duration $T_1$ is a difference between a specified total duration $T$ and the second duration $T_2$,

$$T_2 = (A \times \text{VPC} + B * PC_d) \times C \qquad (1)$$

where $T_2$ is the second duration, and $A, B,$ and C are modified operation parameters.

In an embodiment of the present disclosure, the first control unit 200 is further configured to switch a current operating frequency of a compressor of the air conditioner to a first frequency when the fan operates at the first rotational speed; and switch the current operating frequency of the compressor of the air conditioner to a second frequency when the fan operates at the second rotational speed, wherein the first frequency is less than the second frequency.

In an embodiment of the present disclosure, the device further includes: a second control unit configured to, if the temperature deviation between the current temperature value in the current temperature and humidity value and the specified temperature value is greater than the specified value, control the compressor of the air conditioner to operate at a second frequency until the temperature deviation is less than or equal to the specified value, wherein the second frequency is greater than a specified frequency.

In an embodiment of the present disclosure, the device further includes: a third control unit configured to, if the temperature deviation between the current temperature value in the current temperature and humidity value and the specified temperature value is less than or equal to the specified value, and the current humidity value in the current temperature and humidity value is in the target comfortable humidity range corresponding to the specified temperature value, keep a current operating mode of the fan.

The device provided by the embodiment of the present disclosure is exemplified below.

Fig. 6 is a block diagram illustrating a device for controlling an air conditioner according to an exemplary embodiment. As shown in Fig. 6, the device includes: an obtaining unit 100, a first control unit 200, a second control unit 300, and a third control unit 400.

The device can determine a target comfortable humidity range (RH1, RH2) corresponding to a specified temperature value Ts, and a preset target coil temperature value corresponding to the specified temperature value Ts in advance.

The obtaining unit 100 obtains a current temperature value Td and a current humidity value RHd. After a temperature deviation pn between the current temperature value Td in a current temperature and humidity value and the specified temperature value Ts is determined by the device, when pn<2 and RHd is not in the target comfortable humidity range (RH1, RH2), the first control unit 200 can switch a current operating mode of at least one component including a fan of the air conditioner until the current temperature and humidity value meets a specified requirement.

The first control unit 200 controls the fan of the air conditioner to operate at a first rotational speed for a specified first duration and then to operate at a second rotational speed, wherein the first rotational speed is greater than the second rotational speed; controls the fan to operate at the second rotational speed for a specified second duration and then to operate at the first rotational speed, and switches a current operating frequency of a compressor of the air conditioner to a first frequency; and switches the current operating frequency of the compressor of the air conditioner to a second frequency when the fan operates at the second rotational speed, wherein the first frequency is less than the second frequency.

Optionally, the first control unit 200 switches the current operating mode of at least one component including the fan of the air conditioner according to a humidity parameter of the air conditioner, wherein the humidity parameter includes a humidity deviation between the obtained current humidity value and a preset target humidity value, or a coil temperature deviation between the obtained current coil temperature value of the air conditioner and a preset target coil temperature value. Specifically, the first control unit 200 can control the fan of the air conditioner to operate at a first rotational speed for a first duration and then to operate at a second rotational speed, wherein the first rotational speed is greater than the second rotational speed; and control the fan to operate at the second rotational speed for a second duration and then to operate at the first rotational speed, wherein a process of determining the second duration includes: obtaining a change value of the humidity parameter (VPC) according to a current humidity parameter ($PC_d$) and a humidity parameter of a previous cycle ($PC_m$); and determining the second duration according to a formula (1), wherein the first duration $T_1$ is a specified duration, or the first duration $T_1$ is a difference between a specified total duration T and the second duration $T_2$,

$$T_2 = (A \times \text{VPC} + B * PC_d) \times C \qquad (1)$$

where $T_2$ is the second duration, and $A, B,$ and C are modified operation parameters.

The compressor can also be controlled according to the fan.

When pn>2, the second control unit 300 can control the compressor of the air conditioner to operate at the second frequency until the temperature deviation is less than or equal to the specified value, wherein the second frequency is greater than a specified frequency.

When pn<2 and RHd is in the target comfortable humidity range (RH1, RH2), the third control unit 400 can maintain the current operating mode of the fan.

It can be seen that, in the embodiment of the present disclosure, by controlling the operation of at least one component including the fan, the current temperature and humidity value can meet the specified requirement after the air conditioner is operated, and thus a temperature and humidity double control of the air conditioner is realized; and the switching of the operating mode of the fan can be controlled according to a specified duration strategy, and thus the efficiency of the temperature and humidity double control is improved. In addition, the switching of the operating mode of the fan can also be controlled according to the humidity deviation or the coil temperature deviation, and thus the accuracy of the temperature and humidity double control is further improved.

The present disclosure is described with reference to the flowcharts and/or block diagrams of the method and the device according to the present disclosure.

**Claims**

1. A method for controlling an air conditioner, comprising:

   obtaining (101, 201, 301, 401) a current temperature and humidity of an action area of the air conditioner; and if a temperature deviation between a current temperature in the current temperature and humidity and a specified temperature is less than or equal to a specified value, and a current humidity in the current temperature and humidity is not in a target comfortable humidity range corresponding to the specified temperature, switching (104) a current operating mode of at least one component comprising a fan of the air conditioner according to a humidity parameter of the air conditioner until the current temperature and humidity meets a specified requirement, wherein the humidity parameter comprises a humidity deviation between the obtained current humidity and a preset target humidity, or a coil temperature deviation between the obtained current coil temperature of the air conditioner and a preset target coil temperature,
   wherein the switching the current operating mode of at least one component comprising the fan of the air conditioner according to the humidity parameter of the air conditioner until the current temperature and humidity meets the specified requirement comprises:

      controlling the fan of the air conditioner to operate at a first rotational speed for a first duration and then to operate at a second rotational speed, wherein the first rotational speed is greater than the second rotational speed; and
      controlling the fan to operate at the second rotational speed for a second duration and then to operate at the first rotational speed,
      **characterized in that**
      wherein a process of determining the second duration comprises:

         obtaining a change value of the humidity parameter ($\Delta PC$) according to a current humidity parameter ($PC_d$) and a humidity parameter of a previous cycle ($PC_m$); and
         determining the second duration according to a formula (1), wherein,

$$T_2 = (A \times \Delta PC + B * PC_d) \times C \qquad (1)$$

         where $T_2$ is the second duration, and A, B, and C are modified operation parameters;
         the first duration $T_1$ is a specified duration, or the first duration $T_1$ is a difference between a specified total duration $T$ and the second duration $T_2$.

2. The method according to claim 1, wherein the switching the current operating mode of at least one component comprising the fan of the air conditioner comprises:

   switching a current operating frequency of a compressor of the air conditioner to a first frequency when the fan operates at the first rotational speed; and
   switching the current operating frequency of the compressor of the air conditioner to a second frequency when the fan operates at the second rotational speed, wherein the first frequency is less than the second frequency.

3. The method according to claim 1, further comprising:
if the temperature deviation between the current temperature in the current temperature and humidity and the specified temperature is greater than the specified value, controlling (106, 207, 310, 410) the compressor of the air conditioner to operate at a second frequency until the temperature deviation is less than or equal to the specified value, wherein the second frequency is greater than a specified frequency.

4. The method according to claim 1, further comprising:
if the temperature deviation between the current temperature in the current temperature and humidity and the specified temperature is less than or equal to the specified value, and the current humidity in the current temperature and humidity is in the target comfortable humidity range corresponding to the specified temperature, keeping (105, 206, 309, 409) a current operating mode of the fan.

5. A device for controlling an air conditioner, comprising:

an obtaining unit (100) configured to obtain a current temperature and humidity of an action area of the air conditioner; and
a first control unit (200) configured to, if a temperature deviation between a current temperature in the current temperature and humidity and a specified temperature is less than or equal to a specified value, and a current humidity in the current temperature and humidity is not in a target comfortable humidity range corresponding to the specified temperature, switch a current operating mode of at least one component comprising a fan of the air conditioner according to a humidity parameter of the air conditioner until the current temperature and humidity meets a specified requirement, wherein the humidity parameter comprises a humidity deviation between the obtained current humidity and a preset target humidity, or a coil temperature deviation between the obtained current coil temperature of the air conditioner and a preset target coil temperature,
wherein the first control unit (200) is further configured to control the fan of the air conditioner to operate at a first rotational speed for a first duration and then to operate at a second rotational speed, wherein the first rotational speed is greater than the second rotational speed; and control the fan to operate at the second rotational speed for a second duration and then to operate at the first rotational speed,
**characterized in that**
wherein a process of determining the second duration comprises: obtaining a change value of the humidity parameter ($\Delta PC$) according to a current humidity parameter ($PC_d$) and a humidity parameter of a previous cycle ($PC_m$); and determining the second duration according to a formula (1), wherein the first duration $T_1$ is a specified duration, or the first duration $T_1$ is a difference between a specified total duration $T$ and the second duration $T_2$,

$$T_2 = (A \times \Delta PC + B * PC_d) \times C \qquad (1)$$

where $T_2$ is the second duration, and *A, B,* and *C* are modified operation parameters.

6. The device according to claim 5, wherein the first control unit (200) is further configured to switch a current operating frequency of a compressor of the air conditioner to a first frequency when the fan operates at the first rotational speed; and switch the current operating frequency of the compressor of the air conditioner to a second frequency when the fan operates at the second rotational speed, wherein the first frequency is less than the second frequency.

7. The device according to claim 5, further comprising:
a second control unit (300) configured to, if the temperature deviation between the current temperature in the current temperature and humidity and the specified temperature is greater than the specified value, control the compressor of the air conditioner to operate at a second frequency until the temperature deviation is less than or equal to the specified value, wherein the second frequency is greater than a specified frequency.

8. The device according to claim 5, further comprising:
a third control unit (400) configured to, if the temperature deviation between the current temperature in the current temperature and humidity and the specified temperature is less than or equal to the specified value, and the current humidity in the current temperature and humidity is in the target comfortable humidity range corresponding to the specified temperature, keep a current operating mode of the fan.

**Patentansprüche**

1. Verfahren zur Steuerung einer Klimaanlage, umfassend:

   Erfassen (101, 201, 301, 401) einer aktuellen Temperatur und Luftfeuchtigkeit in einem Aktionsbereich der Klimaanlage; und

   wenn eine Temperaturabweichung zwischen einer aktuellen Temperatur in der aktuellen Temperatur und Luftfeuchtigkeit und einer bestimmten Temperatur kleiner oder gleich einem bestimmten Wert ist, und eine aktuelle Luftfeuchtigkeit in der aktuellen Temperatur und Luftfeuchtigkeit nicht in einem Zielbereich für komfortable Luftfeuchtigkeit liegt, welcher der bestimmten Temperatur entspricht, Umschalten (104) eines aktuellen Betriebsmodus von mindestens einer Komponente, die ein Gebläse der Klimaanlage aufweist, gemäß einem Luftfeuchtigkeitsparameter der Klimaanlage, bis die aktuelle Temperatur und Luftfeuchtigkeit eine bestimmte Anforderung erfüllt, wobei der Luftfeuchtigkeitsparameter eine Luftfeuchtigkeitsabweichung zwischen der erfassen aktuellen Luftfeuchtigkeit und einer voreingestellten Zielluftfeuchtigkeit oder eine Spulentemperaturabweichung zwischen der erfassten aktuellen Spulentemperatur der Klimaanlage und einer voreingestellten Zielspulentemperatur umfasst,

   wobei das Umschalten des aktuellen Betriebsmodus von mindestens einer Komponente, die das Gebläse der Klimaanlage aufweist, gemäß dem Luftfeuchtigkeitsparameter der Klimaanlage, bis die aktuelle Temperatur und Luftfeuchtigkeit die bestimmte Anforderung erfüllt, umfasst:

   Steuern des Gebläses der Klimaanlage, um für eine erste Dauer mit einer ersten Drehzahl zu arbeiten und dann mit einer zweiten Drehzahl zu arbeiten, wobei die erste Drehzahl größer ist als die zweite Drehzahl; und Steuern des Gebläses, so dass es für eine zweite Dauer mit der zweiten Drehzahl und anschließend mit der ersten Drehzahl arbeitet,

   **dadurch gekennzeichnet, dass**
   wobei ein Prozess zur Bestimmung der zweiten Dauer umfasst:

   Erfassen eines Änderungswertes des Luftfeuchtigkeitsparameters ($\Delta PC$) gemäß einem aktuellen Luftfeuchtigkeitsparameter ($PC_d$) und einem Luftfeuchtigkeitsparameter eines vorherigen Zyklus ($PC_m$); und
   Bestimmen der zweiten Dauer gemäß einer Formel (1), wobei,

   $$T_2 = (A \times \Delta PC + B * PC_d) \times C \qquad (1)$$

   wobei $T_2$ die zweite Dauer und $A$, $B$ und $C$ die modifizierten Betriebsparameter sind;
   wobei die erste Dauer $T_1$ eine bestimmte Dauer ist, oder die erste Dauer $T_1$ eine Differenz zwischen einer bestimmten Gesamtdauer $T$ und der zweiten Dauer $T_2$ ist.

2. Verfahren nach Anspruch 1, wobei das Umschalten des aktuellen Betriebsmodus von mindestens einer Komponente, die das Gebläse der Klimaanlage aufweist, umfasst:

   Umschalten einer aktuellen Betriebsfrequenz eines Kompressors der Klimaanlage auf eine erste Frequenz, wenn das Gebläse mit der ersten Drehzahl arbeitet; und
   Umschalten der aktuellen Betriebsfrequenz des Kompressors der Klimaanlage auf eine zweite Frequenz, wenn das Gebläse mit der zweiten Drehzahl arbeitet, wobei die erste Frequenz niedriger ist als die zweite Frequenz.

3. Verfahren nach Anspruch 1, ferner umfassend:
   wenn die Temperaturabweichung zwischen der aktuellen Temperatur in der aktuellen Temperatur und Luftfeuchtigkeit und der bestimmten Temperatur größer als der bestimmte Wert ist, Steuern (106, 207, 310, 410) des Kompressors der Klimaanlage, um mit einer zweiten Frequenz zu arbeiten, bis die Temperaturabweichung kleiner oder gleich dem bestimmten Wert ist, wobei die zweite Frequenz größer als eine bestimmte Frequenz ist.

4. Verfahren nach Anspruch 1, ferner umfassend:
   wenn die Temperaturabweichung zwischen der aktuellen Temperatur in der aktuellen Temperatur und Luftfeuchtigkeit und der bestimmten Temperatur kleiner oder gleich dem bestimmten Wert ist und die aktuelle Luftfeuchtigkeit in der aktuellen Temperatur und Luftfeuchtigkeit in dem Zielbereich für komfortable Luftfeuchtigkeit liegt, welcher der bestimmten Temperatur entspricht, Beibehalten (105, 206, 309, 409) eines aktuellen Betriebsmodus des **Gebläses.**

**5.** Vorrichtung zur Steuerung einer Klimaanlage, aufweisend:

eine Erfassungseinheit (100), die dazu ausgebildet ist, eine aktuelle Temperatur und Luftfeuchtigkeit eines Aktionsbereichs der Klimaanlage zu erfassen; und

eine erste Steuereinheit (200), die dazu ausgebildet ist, wenn eine Temperaturabweichung zwischen einer aktuellen Temperatur in der aktuellen Temperatur und Luftfeuchtigkeit und einer bestimmten Temperatur kleiner oder gleich einem bestimmten Wert ist, und eine aktuelle Luftfeuchtigkeit in der aktuellen Temperatur und Luftfeuchtigkeit nicht in einem Zielbereich für komfortable Luftfeuchtigkeit liegt, welcher der bestimmten Temperatur entspricht, einen aktuellen Betriebsmodus von mindestens einer Komponente, die ein Gebläse der Klimaanlage aufweist, gemäß einem Luftfeuchtigkeitsparameter der Klimaanlage umzuschalten, bis die aktuelle Temperatur und Luftfeuchtigkeit eine bestimmte Anforderung erfüllt, wobei der Luftfeuchtigkeitsparameter eine Luftfeuchtigkeitsabweichung zwischen der erfassen aktuellen Luftfeuchtigkeit und einer voreingestellten Zielluftfeuchtigkeit oder eine Spulentemperaturabweichung zwischen der erfassten aktuellen Spulentemperatur der Klimaanlage und einer voreingestellten Zielspulentemperatur umfasst,

wobei die erste Steuereinheit (200) ferner so ausgebildet ist, dass sie das Gebläse der Klimaanlage so steuert, dass es für eine erste Dauer mit einer ersten Drehzahl arbeitet und dann mit einer zweiten Drehzahl arbeitet, wobei die erste Drehzahl größer ist als die zweite Drehzahl, und das Gebläse so steuert, dass es für eine zweite Dauer mit der zweiten Drehzahl arbeitet und dann mit der ersten Drehzahl arbeitet,

**dadurch gekennzeichnet, dass**

wobei ein Prozess zur Bestimmung der zweiten Dauer umfasst: Erfassen eines Änderungswertes des Luftfeuchtigkeitsparameters ($\Delta PC$) gemäß einem aktuellen Luftfeuchtigkeitsparameter ($PC_d$) und einem Luftfeuchtigkeitsparameter eines vorherigen Zyklus ($PC_m$); und Bestimmen der zweiten Dauer gemäß einer Formel (1), wobei die erste Dauer $T_1$ eine bestimmte Dauer ist, oder die erste Dauer $T_1$ eine Differenz zwischen einer bestimmte Gesamtdauer $T$ und der zweiten Dauer $T_2$ ist,

$$T_2 = (A \times \Delta PC + B * PC_d) \times C \qquad (1)$$

wobei $T_2$ die zweite Dauer und $A, B$ und $C$ die modifizierten Betriebsparameter sind.

**6.** Vorrichtung nach Anspruch 5, wobei die erste Steuereinheit (200) ferner so ausgebildet ist, dass sie eine aktuelle Betriebsfrequenz eines Kompressors der Klimaanlage auf eine erste Frequenz umschaltet, wenn das Gebläse mit der ersten Drehzahl arbeitet, und die aktuelle Betriebsfrequenz des Kompressors der Klimaanlage auf eine zweite Frequenz umschaltet, wenn das Gebläse mit der zweiten Drehzahl arbeitet, wobei die erste Frequenz niedriger ist als die zweite Frequenz.

**7.** Vorrichtung nach Anspruch 5, ferner aufweisend:
eine zweite Steuereinheit (300), die dazu ausgebildet ist, wenn die Temperaturabweichung zwischen der aktuellen Temperatur in der aktuellen Temperatur und Luftfeuchtigkeit und der bestimmten Temperatur größer als der bestimmte Wert ist, den Kompressors der Klimaanlage zu steuern, um mit einer zweiten Frequenz zu arbeiten, bis die Temperaturabweichung kleiner oder gleich dem bestimmten Wert ist, wobei die zweite Frequenz größer als eine bestimmte Frequenz ist.

**8.** Vorrichtung nach Anspruch 5, ferner aufweisend:
eine dritte Steuereinheit (400), die dazu ausgebildet ist, wenn die Temperaturabweichung zwischen der aktuellen Temperatur in der aktuellen Temperatur und Luftfeuchtigkeit und der bestimmten Temperatur kleiner oder gleich dem bestimmten Wert ist und die aktuelle Luftfeuchtigkeit in der aktuellen Temperatur und Luftfeuchtigkeit in dem Zielbereich für komfortable Luftfeuchtigkeit liegt, welcher der bestimmten Temperatur entspricht, einen aktuellen Betriebsmodus des Gebläses beizubehalten.

**Revendications**

**1.** Procédé de commande d'un conditionneur d'air, comprenant les étapes consistant à :

obtenir (101, 201, 301, 401) une température et une humidité courantes d'une zone d'action du conditionneur d'air ; et
si un écart de température entre une température courante de la température et l'humidité courantes et une température spécifiée est inférieur ou égal à une valeur spécifiée, et si une humidité courante de la température et l'humidité courantes ne s'inscrit pas dans une plage d'humidité confortable cible correspondant à la température spécifiée, commuter (104) un mode de fonctionnement courant d'au moins un composant comprenant un ventilateur du conditionneur d'air conformément à un paramètre d'humidité du conditionneur d'air jusqu'à ce que la température et l'humidité courantes satisfassent une exigence spécifiée, dans lequel le paramètre d'humidité comprend un écart d'humidité entre l'humidité courante obtenue et une humidité cible prédéfinie, ou un écart de température de serpentin entre la température de serpentin courante obtenue du conditionneur d'air et une température de serpentin cible prédéfinie,

dans lequel l'étape de commutation du mode de fonctionnement courant d'au moins un composant comprenant le ventilateur du conditionneur d'air conformément au paramètre d'humidité du conditionneur d'air jusqu'à ce que la température et l'humidité courantes satisfassent l'exigence spécifiée consiste à :

commander le ventilateur du conditionneur d'air pour qu'il fonctionne à une première vitesse de rotation pendant une première durée et pour qu'il fonctionne ensuite à une seconde vitesse de rotation, dans lequel la première vitesse de rotation est supérieure à la seconde vitesse de rotation ; et

commander le ventilateur pour qu'il fonctionne à la seconde vitesse de rotation pendant une seconde durée et pour qu'il fonctionne ensuite à la première vitesse de rotation,

**caractérisé en ce que**

un processus de détermination de la seconde durée consiste à :

obtenir une valeur de variation du paramètre d'humidité ($\Delta PC$) conformément à un paramètre d'humidité courante ($PC_d$) et à un paramètre d'humidité d'un cycle précédent ($PC_m$) ; et

déterminer la seconde durée conformément à une formule (1), dans lequel,

$$T_2 = (A \times \Delta PC + B \ast PC_d) \times C \qquad\qquad (1)$$

où $T_2$ est la seconde durée, et $A$, $B$ et $C$ sont des paramètres de fonctionnement modifiés ;

la première durée $T_1$ est une durée spécifiée, ou la première durée $T_1$ est une différence entre une durée totale spécifiée $T$ et la seconde durée $T_2$.

2. Procédé selon la revendication 1, dans lequel l'étape de commutation du mode de fonctionnement courant d'au moins un composant comprenant le ventilateur du conditionneur d'air consiste à :

commuter une fréquence de fonctionnement courante d'un compresseur du conditionneur d'air à une première fréquence lorsque le ventilateur fonctionne à la première vitesse de rotation ; et

commuter la fréquence de fonctionnement courante du compresseur du conditionneur d'air à une seconde fréquence lorsque le ventilateur fonctionne à la seconde vitesse de rotation, dans lequel la première fréquence est inférieure à la seconde fréquence.

3. Procédé selon la revendication 1, comprenant en outre l'étape consistant à :

si l'écart de température entre la température courante de la température et l'humidité courantes et la température spécifiée est supérieur à la valeur spécifiée, commander (106, 207, 310, 410) le compresseur du conditionneur d'air pour qu'il fonctionne à une seconde fréquence jusqu'à ce que l'écart de température soit inférieur ou égal à la valeur spécifiée, dans lequel la seconde fréquence est supérieure à une fréquence spécifiée.

4. Procédé selon revendication 1, comprenant en outre l'étape consistant à :

si l'écart de température entre la température courante de la température et l'humidité courantes et la température spécifiée est inférieur ou égal à la valeur spécifiée, et si l'humidité courante de la température et l'humidité courantes s'inscrit dans la plage d'humidité confortable cible correspondant à la température spécifiée, maintenir (105, 206, 309, 409) un mode de fonctionnement courant du ventilateur.

5. Dispositif de commande d'un conditionneur d'air, comprenant :

une unité d'obtention (100) configurée pour obtenir une température et une humidité courantes d'une zone d'action du conditionneur d'air ; et

une première unité de commande (200) configurée pour, si un écart de température entre une température courante de la température et l'humidité courantes et une température spécifiée est inférieur ou égal à une valeur spécifiée, et si une humidité courante de la température et l'humidité courantes ne s'inscrit pas dans une plage d'humidité confortable cible correspondant à la température spécifiée, commuter un mode de fonctionnement courant d'au moins un composant comprenant un ventilateur du conditionneur d'air conformément à un paramètre d'humidité du conditionneur d'air jusqu'à ce que la température et l'humidité courantes satisfassent une exigence spécifiée, dans lequel le paramètre d'humidité comprend un écart d'humidité entre l'humidité courante obtenue et une humidité cible prédéfinie, ou un écart de température de serpentin entre la température de serpentin courante obtenue du conditionneur d'air et une température de serpentin cible prédéfinie,

dans lequel la première unité de commande (200) est en outre configurée pour commander le ventilateur du conditionneur d'air pour qu'il fonctionne à une première vitesse de rotation pendant une première durée et pour qu'il fonctionne ensuite à une seconde vitesse de rotation, dans lequel la première vitesse de rotation est supérieure à la seconde vitesse de rotation ; et pour commander le ventilateur pour qu'il fonctionne à la seconde vitesse de rotation pendant une seconde durée et pour qu'il fonctionne ensuite à la première vitesse de rotation, **caractérisé en ce que**

un processus de détermination de la seconde durée consiste à : obtenir une valeur de variation du paramètre d'humidité ($\Delta PC$) conformément à un paramètre d'humidité courante ($PC_d$) et à un paramètre d'humidité d'un cycle précédent ($PC_m$); et déterminer la seconde durée conformément à une formule (1), dans lequel la première durée $T_1$ est une durée spécifiée, ou la première durée $T_1$ est une différence entre une durée totale spécifiée $T$ et la seconde durée $T_2$,

$$T_2 = (A \times \Delta PC + B \star PC_d) \times C \qquad (1)$$

où $T_2$ est la seconde durée, et $A$, $B$ et $C$ sont des paramètres de fonctionnement modifiés.

6. Dispositif selon la revendication 5, dans lequel la première unité de commande (200) est en outre configurée pour commuter une fréquence de fonctionnement courante d'un compresseur du conditionneur d'air à une première fréquence lorsque le ventilateur fonctionne à la première vitesse de rotation ; et pour commuter la fréquence de fonctionnement courante du compresseur du conditionneur d'air à une seconde fréquence lorsque le ventilateur fonctionne à la seconde vitesse de rotation, dans lequel la première fréquence est inférieure à la seconde fréquence.

7. Dispositif selon la revendication 5, comprenant en outre :
une deuxième unité de commande (300) configurée pour, si l'écart de température entre la température courante de la température et l'humidité courantes et la température spécifiée est supérieur à la valeur spécifiée, commander le compresseur du conditionneur d'air pour qu'il fonctionne à une seconde fréquence jusqu'à ce que l'écart de température soit inférieur ou égal à la valeur spécifiée, dans lequel la seconde fréquence est supérieure à une fréquence spécifiée.

8. Dispositif selon la revendication 5, comprenant en outre :
une troisième unité de commande (400) configurée pour, si l'écart de température entre la température courante de la température et l'humidité courantes et la température spécifiée est inférieur ou égal à la valeur spécifiée, et si l'humidité courante de la température et l'humidité courantes s'inscrit dans la plage d'humidité confortable cible correspondant à la température spécifiée, maintenir un mode de fonctionnement courant du ventilateur.

Fig. 1

Current temperature and humidity value of an action area of the air conditioner is obtained ⟋ 201

Temperature deviation pn between a current temperature value Td in the current temperature and humidity value and a specified temperature value Ts is determined ⟋ 202

⟋ 203

Yes ◇ Whether pn⩾ 3 is determined ◇ No

⟋ 204

◇ Whether RHd>RH2 is determined ◇ No

Yes ⟋ 205

Fan of the air conditioner is controlled to operate at a first rotational speed for a specified first duration and then to operate at a second rotational speed, and the compressor of the air conditioner is controlled to operate at a first frequency for the specified first duration and then to operate at a second frequency; and the fan of the air conditioner is controlled to operate at the second rotational speed for a specified second duration and then to operate at the first rotational speed, and the compressor of the air conditioner is controlled to operate at the second frequency for the specified second duration and then to operate at the first frequency

⟋ 206

Current operating mode of the fan is kept

⟋ 207

Compressor of the air conditioner is controlled to operate at the second frequency

Fig. 2

Fig. 3

Current temperature and humidity value of
an action area of the air conditioner is
obtained ⌐ 401

Temperature deviation pn between a current
temperature value Td in the current
temperature and humidity value and a
specified temperature value Ts is
determined ⌐ 402

⌐ 403

Yes ◇ Whether pn☐ 3 is determined ◇ No

⌐ 404

Whether RH1<RHd<RH2 is
determined ◇ Yes

No ⌐ 405 ⌐ 409

Coil temperature deviation between the
current coil temperature value of the air
conditioner and the preset target coil
temperature value is determined as the
current humidity parameter

Current operating mode of the fan
is kept

Coil temperature deviation corresponding to
a previous control cycle is obtained, and a
change value of the coil temperature
deviation is determined ⌐ 406

⌐ 410

Second duration and a first duration are
determined according to the formula (1) ⌐ 407

Compressor of the air conditioner is
controlled to operate at the second
frequency

Fan of the air conditioner is controlled to
operate at a first rotational speed for the first
duration and then to operate at a second
rotational speed, and the compressor of the
air conditioner is controlled to operate at a
first frequency for the first duration and then
to operate at a second frequency; and the
fan of the air conditioner is controlled to
operate at the second rotational speed for
the second duration and then to operate at
the first rotational speed, and the
compressor of the air conditioner is
controlled to operate at the second
frequency for the second duration and then
to operate at the first frequency ⌐ 408

Fig. 4

100

Obtaining Unit

20
0

First Control Unit

Fig. 5

100

Obtaining Unit

200

First Control Unit

300

Second Control Unit

400

Third Control Unit

Fig. 6

**EP 3 677 851 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0893657 A1
- EP 3059515 A1
- EP 3086048 A1